(19) Europäisches Patentamt
European Patent Office
Office européen des brevets

(11) EP 0 551 008 B1

(12) **EUROPEAN PATENT SPECIFICATION**

(45) Date of publication and mention of the grant of the patent:
**06.03.1996 Bulletin 1996/10**

(51) Int. Cl.[6]: **B60H 1/32**, F25B 49/02

(21) Application number: **92311824.4**

(22) Date of filing: **24.12.1992**

(54) **Control apparatus for use in automotive air conditioning system**

Steuervorrichtung zur Verwendung in einer Kraftfahrzeugklimaanlage

Dispositif de commande utilisé dans une installation d'air conditionné de voiture automobile

(84) Designated Contracting States:
**DE FR GB IT SE**

(30) Priority: **07.01.1992 JP 1066/92**

(43) Date of publication of application:
**14.07.1993 Bulletin 1993/28**

(73) Proprietor: **SANDEN CORPORATION**
**Isesaki-shi Gunma, 372 (JP)**

(72) Inventor: **Inoue, Atsuo, c/o Sanden Corporation**
**Isesaki-shi, Gunma 372 (JP)**

(74) Representative: **Jackson, Peter Arthur et al**
**GILL JENNINGS & EVERY**
**Broadgate House**
**7 Eldon Street**
**London EC2M 7LH (GB)**

(56) References cited:
**EP-A- 0 275 045**
**DE-A- 3 829 096**
**US-A- 4 893 480**
**US-A- 4 909 043**
**US-A- 5 022 234**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 551 008 B1

Printed by Rank Xerox (UK) Business Services
2.9.10/3.4

## Description

The present invention relates to an automotive air conditioning system, and more particularly, to a control apparatus for controlling an operation of the automotive air conditioning system which includes an externally controlled variable capacity type refrigerant compressor.

Control apparatuses for controlling an operation of an automotive air conditioning system which includes an externally controlled variable capacity type refrigerant compressor are well known in the art.

According to one conventional control apparatus, in the initial operation stage of the automotive air conditioning system, temperature T'e of the air immediately downstream an evaporator is controlled as indicated by dashed lines in Figures 5 and 6.

With reference to Figures 5 and 6, from a time t0 when the operation of a refrigerant circuit is initiated to a time t'1 when the temperature T'e drops to a certain value T3 which is slightly greater than a set temperature Tset, a control point of pressure in a compressor suction chamber is maintained at the minimum boundary value 1.0 $kg/cm^2$ G so as to quickly drop the temperature T'e by means of outputting one electric signal having one certain amperage Ipl from the control apparatus to an externally controlled variable capacity control mechanism of the compressor. Once the temperature T'e drops to the certain value T3, the control point of pressure in the compressor suction chamber is varied so as to converge the temperature Te at the set temperature Tset by means of outputting another electric signal having various amperages which is produced by the proportional control action of the control apparatus. The proportional control action is initialised by the one certain amperage Ipl.

Therefore, in the initial operation stage of the automotive air conditioning system, the temperature Te of the air immediately downstream of the evaporator overshoots the set temperature Tset by a great value so that it takes a long time to converge the temperature T'e at the set temperature Tset. Accordingly, the passenger compartment of the automobile can not adequately air conditioned in the initial operation stage of the automotive air conditioning system.

US-A-4893480 discloses an automotive air conditioning system including, a refrigerant circuit having a refrigerant compressor with an externally controlled variable capacity control mechanism and an evaporator connected to a suction chamber of the refrigerant compressor; moving means for moving air through an exterior surface of the evaporator; and a control mechanism for controlling an operation thereof; the control mechanism including, sensing means for sensing temperature of air immediately downstream of the evaporator, comparing means for determining whether the temperature of air immediately downstream the evaporator during the operation of the refrigerant circuit is higher that one certain value which is higher than a set value, and carrying out means for carrying out operation of a feedback control action; and according to the present invention, such a system is characterised by the control mechanism further comprising a first determining means for determining a first value of a control point of pressure in the suction chamber of the compressor according to the temperature of air immediately downstream of the evaporator at a time immediately before the operation of the refrigerant circuit is initiated, a second determining means for determining a second value of the control point of pressure in the suction chamber of the compressor according to a thermal gradient with respect to a time in a situation where the temperature of air immediately downstream the evaporator immediately before reaches the one certain value from a higher value side thereof, changing means for changing a first situation in which the control point of pressure in the suction chamber of the compressor is adjusted to be maintained at the first value to a second situation in which the control point of pressure in the suction chamber of the compressor is adjusted to be varied by a result of operation of the feedback control action when the temperature of air immediately downstream of the evaporator during the operation of the refrigerant circuit is equal to or lower than the one certain value.

In the accompanying drawings:-

Figure 1 illustrates a block diagram of an automotive air conditioning system which includes an externally controlled variable capacity type refrigerant compressor.

Figure 2 is a graph showing a relationship between an amperage of a third electric signal, a control point of pressure in a compressor suction chamber, and a detected temperature Tea.

Figure 3 is a graph showing a relationship between an amperage of twelfth electric signal, the control point of pressure in a compressor suction chamber, and a thermal gradient $\alpha n$.

Figure 4 is a flow chart illustrating an operational manner in an initial operation stage of the automotive air conditioning system shown in Figure 1.

Figures 5 illustrates a cool-down characteristic in an initial operation stage of an automotive air conditioning system in a situation where temperature of air immediately downstream an evaporator at a time immediately before an operation of a refrigerant circuit is initiated is equal to or higher than one boundary value. In the drawing, a solid line indicates the cool-down characteristic of the automotive air conditioning system shown in Figure 1, and a dashed line indicates the cool-down characteristic of the automotive air conditioning system in accordance with one prior art embodiment.

Figures 6 illustrates a cool-down characteristic in an initial operation stage of the automotive air conditioning system in a situation where temperature of air immediately downstream an evaporator at a time immediately before the operation of the refrigerant circuit in initiated is lower than one boundary value.

In the drawing, a solid line indicates the cool-down characteristic of the automotive air conditioning system shown in Figure 1, and a dashed line indicates the cool-down characteristic of the automotive air conditioning system in accordance with one prior art embodiment.

With reference to Figure 1 illustrating a block diagram of an automotive air conditioning system in accordance with one embodiment of the present invention, the automotive air conditioning system includes refrigerant circuit 10 and control apparatus 20 which controls an operation of the automotive air conditioning system. Refrigerant circuit 10 includes refrigerant compressor 11 with an externally controlled variable capacity control mechanism (not shown), condenser 12, expansion device 13 and evaporator 14 these which are connected in series. Electromagnetic clutch 111 is fixedly mounted on compressor 11, and intermittently transmits the power derived from an external power source, such as an engine 15 of an automobile to a drive shaft of the compressor 10 in order to intermittently operate the compressor 10. Refrigerant circuit 10 further includes condenser fan 121 which is associated with condenser 12 so as to pass the air through an exterior surface of condenser 12 by virtue of operation thereof, and evaporator fan 141 which is associated with evaporator 14 so as to pass the air through an exterior surface of evaporator 14 by virtue of operation thereof. Condenser fan 121 and evaporator fan 141 are operated by receiving an electric power from DC battery 16 installed in an engine compartment of the automobile.

Control apparatus 20 includes thermosensor 17, primary initial value generating device 21, first comparing device 23, boundary value generating device 24, second comparing device 25, set value generating device 26a, subtracter 26b, first operation device 28, second operation device 26c, secondary initial value generating device 29, second switching device 27, and amplifier 30 theses which are described in detail below.

Thermosensor 17 is associated with evaporator 14, of which an outlet is connected to a suction chamber of compressor 11, so as to detect temperature Te of the air immediately downstream evaporator 14 at a predetermined very short time interval $\Delta T$, and generates first electric signal S1 representing a detected temperature Te. Thermosensor 17 further detects temperature Tea of the air immediately downstream evaporator 14 at a time immediately before the operation of compressor 11, i.e., the operation of the refrigerant circuit 10 is initiated, and generates second electric signal S2 which represents the detected temperature Tea of the air immediately downstream evaporator 14 at a time immediately before the operation of refrigerant circuit is initiated. Thermosensor 17 is connected to a primary initial value generating device 21 so as to send second electric signal S2 to primary initial value generating device 21. Primary initial value generating device 21 is further connected to first switching device 22 which is turned on and off so as to initiate and terminate the operation of the automotive air conditioning system.

When the air in a passenger compartment of the automobile is demanded to be cooled, the first switching device 21 is turned on. As the first switching device 21 is turned on, an operation of evaporator fan 141 and condenser fan 121 is initiated, and concurrently, an operation of control apparatus 20 is initiated so that second switching device 27 operates to connect a primary initial value generating device 21 to amplifier 30 through first terminal 27a thereof. After this, an electromagnetic coil (not shown ) of electromagnetic clutch 111 is energized so that an operation of compressor 11 is initiated. When compressor 11 operates, a condensation of the compressed gaseous refrigerant at condenser 12 with heat exchanging, an expansion of the condensed refrigerant at expansion device 13, and an evaporation of the expanded refrigerant at evaporator 14 with heat exchanging are successively carried out. Thereafter, the vaporized refrigerant in evaporator 14 returns to compressor 11. As long as compressor 11 operates, the above-mentioned successive operational manners are repeated.

According to the initiation of the operation of control apparatus 20, primary initial value generating device 21 processes second electric signal S2 sent from thermosensor 17 to generate third electric signal S3 of which amperage Ia varies in response to changes in the detected temperature Tea. A manner of generation of third electric signal S3 at primary control value generating device 21 is described in detail below.

With reference to Figure 2, when the detected temperature Tea is equal to or lower than a predetermined first boundary value T1, e.g., 15 °C, amperage Ia of third electric signal S3 is maintained at a first constant value Ic1 which intends to adjust a control point of pressure in a compressor suction chamber at 2.5 $kg/cm^2$ G. When the detected temperature Tea is equal to or higher than a predetermined second boundary value T2, e.g., 30 °C which is higher than the predetermined first boundary value T1, amperage Ia of third electric signal S3 is maintained at a second constant value Ic2 which intends to adjust the control point of pressure in the compressor suction chamber at 1.0 $kg/cm^2$ G. Furthermore, when the detected temperature Tea is higher than the predetermined first boundary value T1 but is lower the predetermined second boundary value T2, amperage Ia of third electric signal S3 varies in a range between the first constant values Ic1 which intends to adjust the control point of pressure in a compressor suction chamber at 2.5 $kg/cm^2$ G and a third constant value Ic3 which intends to adjust the control point of pressure in the compressor suction chamber at 1.7 $kg/cm^2$ G.

First comparing device 23 is connected to thermosensor 17 so as to receive second electric signal S2 from thermosensor 17. First comparing device 23 is further connected to a boundary value generating device 24 in which fourth electric signal S4 representing the predetermined second boundary value T2 is generated. First comparing device 23 processes second electric signal S2 sent from thermosensor 17 and fourth electric signal S4 sent from boundary value generating device 24 so as to compare whether the detected temperature Tea is equal to or higher than the predetermined second boundary value T2.

In this comparing process, if the detected temperature Tea is equal to or higher than the predetermined second boundary value T2, first comparing device 23 generates a fifth electric signal S5 representing the comparing result in which the detected temperature Tea is equal to or higher than the predetermined second boundary value T2. On the other hand, if the detected temperature Tea is lower than the predetermined second boundary value T2, first comparing device 23 generates a sixth electric signal S6 representing the comparing result in which the detected temperature Tea is lower than the predetermined second boundary value T2.

Second comparing device 25 is connected to thermosensor 17 so as to receive first electric signal S1 representing the detected temperature Te. Second comparing device 25 is further connected to a set value generating device 26a in which a seventh electric signal S7 representing a third boundary value T3 which is higher than a set temperature Tset of the air immediately downstream evaporator 14 by a predetermined slight amount of value ΔTset is generated. Usually, the third boundary value T3 is in a range between the predetermined first and second boundary values T1 and T2. Second comparing device 25 processes first electric signal C1 sent from thermosensor 17 and the seventh electric signal S7 sent from the set value generating device 26a so as to compare whether the detected temperature Te is higher than the third boundary value T3.

In this comparing process, if the detected temperature Te is higher than the third boundary value T3, second comparing device 25 generates an eighth electric signal S8 representing the comparing result in which the detected temperature Te is higher than the third boundary value T3. On the other hand, if the detected temperature Te is equal to or lower than the third boundary value T3, second comparing device 25 generates an ninth electric signal S9 representing the comparing result in which the detected temperature Te is equal to or lower than the third boundary value T3.

First operation device 28 is connected to thermosensor 17 so as to receive the first electric signal S1 representing the detected temperature Te from thermosensor 17. First operation device 28 processes the first electric signal S1 so as to carry out an operation of the following equation.

$$\alpha(n) = (Te(n) - Te(n-m))/\beta t \qquad (1)$$

In equation (1), the appended symbols (n) and (n-m) indicate the ordinal number of the detected temperature Te. α(n) is a thermal gradient of the detected temperature Te(n) with respect to a predetermined short time period βt in a time immediately before the detected temperature Te(n) reaches to the third boundary value T3 from a higher value side of the third boundary value T3. In the term Te(n-m), m is a quotient of βt/ΔT, but is a natural number because that βt is predetermined to be a multiple of ΔT.

First operation device 28 generates a tenth electric signal S10 representing the thermal gradient α(n) and is connected to a secondary initial value generating device 29 so as to output the tenth electric signal S10 to secondary initial value generating device 29. Secondary initial value generating device 29 is further connected to primary initial value generating device 21 so as to receive third electric signal S3 from primary initial value generating device 21. Secondary initial value generating device 29 is still further connected to first comparing device 23 so as to receive fifth and sixth electric signals S5 and S6 from the first comparing device 23. Secondary initial value generating device 29 processes fifth and sixth electric signals S5 and S6 sent from first comparing device 23, third electric signal S3 sent form primary initial value generating device 21, and tenth electric signal S10 sent from first operation device 28.

In this processing process, when secondary initial value generating device 29 receives the sixth electric signal S6 representing the comparing result in which the detected temperature Tea is lower than the predetermined second boundary value T2, secondary initial value generating device 29 generates an eleventh electric signal S11 which is identical to the third electric signal S3 having amperage Ia which varies in response to changes in the detected temperature Tea. On the other hand, when secondary initial value generating device 29 receives the fifth electric signal S5 representing the comparing result in which the detected temperature Tea is equal to or higher than the predetermined second boundary value T2, secondary control value generating device 29 generates a twelfth electric signal S12 of which amperage Ib varies in response to changes in the thermal gradient α(n). A manner of generation of twelfth electric signal S12 at secondary initial value generating device 29 is described in detail below.

with reference to Figure 3, when the thermal gradient α(n) is equal to or smaller than a predetermined first boundary value αa, e.g., 0.01°c/sec., amperage Ib of the twelfth electric signal S12 is maintained at a fourth constant value Ic4 which intends to adjust the control point of pressure in the compressor suction chamber pressure at 1.5 kg/cm$^2$ G. When the thermal gradient α(n) is equal to or greater than a predetermined second boundary value αb e.g., 0.1°c/sec. which is greater than the predetermined first boundary value αa, amperage Ib of twelfth electric signal S12 is maintained at a fifth constant value Ic5 which is equal to the first constant value Ic1 shown in Figure 2 and therefore, intends to control the control point of pressure in the compressor suction chamber pressure at 2.5 kg/cm$^2$ G. Furthermore, when the thermal gradient α(n) is greater than the predetermined first value αa but is smaller than the predetermined second value αb, amperage Ib of twelfth electric signal S12 varies in a range between the fourth and fifth constant values Ic4 and Ic5 so that the control point of pressure in the compressor suction chamber pressure is intended to be varied within a range between 2.5 kg/cm$^2$ G and 1.5 kg/cm$^2$ G. Secondary initial value generating device 29 is furthermore connected to second operation device 26c so as to send the eleventh and twelfth electric signals S11 and S12 to second operation device 26c.

The set value generating device 26a further generates a thirteenth electric signal S13 which represents the set temperature Tset of the air immediately downstream evaporator 14. The set value generating device 26a is further connected to subtracter 26b so as to send the thirteenth electric signal S13 to subtracter 26b therefrom. Subtracter 26b is further connected to thermosensor 17 so as to receive the first electric signal S1 representing the detected temperature Te. Subtracter 26b processes the thirteenth electric signal S13 sent from the set value generating device 26a and first electric signal S1 sent from thermosensor 17 so as to subtract the detected temperature Te from the set temperature Tset. This subtraction is shown by the following equation.

$$\Delta Tv = Tset - Te \qquad (2)$$

The subtracter 26b generates a fourteenth electric signal S14 representing ΔTv and is connected to second operation device 26c so as to send the fourteenth electric signal S14 to second operation device 26c.

Second operation device 26c processes the eleventh and twelfth electric signals S11 and S12 sent from secondary initial value generating device 29, and fourteenth electric signal S14 sent from subtracter 26b so as to carry out the operation of the following equation.

$$I(\ell) = I(\ell-1) + Kp(\Delta Tv(\ell) - \Delta Tv(\ell-1)) \qquad (3)$$

In equations (3), Kp is a factor of proportionality. Appended symbols ($\ell$) or ($\ell$-1) indicate the ordinal number of the values processed in the second operation device 26c.

When second operation device 26c receives the eleventh electric signal S11 while the appended symbol ($\ell$) is 1, the term I($\ell$-1) becomes Ia. On the other hand, when second operation device 26a receives the twelfth electric signal S12 while the appended symbol ($\ell$) is 1, the term I($\ell$-1) beams Ib. Second operation device 26c generates a fifteenth electric signal S15 having various amperages I($\ell$).

Second switching device 27 receives the eighth and ninth electric signals S8 and S9 sent from second comparing device 25. When second switching device 27 receives ninth electric signal S9, that is, when the detected temperature Te is equal to or lower than the third boundary value T3, second switching device 27 operates to connect second operation device 26c to amplifier 30 through second terminal 27b of second switching device 27 so that amperage I($\ell$) of the fifteenth electric signal S15 is amplified to be amperage $G_I(I(\ell))$ by amplifier 30. In the formula $G_I(I(\ell))$, $G_I$ is the gain given by virtue of operation of amplifier 30. The electric current having amplified amperage $G_I(I(\ell))$ is supplied to a solenoid (not shown) of the externally controlled variable capacity control mechanism of the compressor. On the other hand, when second switching device 27 receives eighth electric signal S8, that is, when the detected temperature Te is higher than the third boundary value T3, the connection between primary initial value generating device 21 and amplifier 30 is maintained so that amperage Ia of the third electric signal S3 is amplified to be amperage $G_I$(Ia) by amplifier 30. The electric current having amplified amperage $G_I$(Ia) is supplied to the solenoid (not shown) of the externally controlled variable capacity control mechanism of the compressor.

In this embodiment, when the amplified amperage of the electric current supplied to the solenoid of the externally controlled variable capacity control mechanism of the compressor increases, the control point of pressure in the compressor suction chamber is shifted to a greater value side thereof. In reverse, when the amplified amperage of the electric current supplied to the solenoid of the externally controlled variable capacity control mechanism of the compressor decreases, the control point of pressure in the compressor suction chamber is shifted to a smaller value side thereof.

Furthermore, set value generating device 26a, subtracter 26b and second operation device 26c form a control device 26 which carries out a proportional control action.

An operational manner of the automotive air conditioning system in accordance with one embodiment of the present invention is described below. With reference to Figure 4 in addition to Figure 1, initially, when the air of the passenger compartment of the automobile is demanded to be cooled, the first switching device 22 is turned on so as to initiate the operation of the automotive air conditioning system in step 201. When the first switching device 22 is turned on, step 201 proceeds to step 202. In step 202, the operation of condenser fan 121 and evaporator fan 141 is initiated, and concurrently, the operation of control apparatus 20 is initiated so that second switching device 27 operates to connect primary initial value generating device 21 to amplifier 30 through first terminal 27a thereof.

When primary initial value generating device 21 is connected to amplifier 30, step 202 proceeds to step 203. In step 203, the second electric signal S2 representing the detected temperature Tea is sent to primary initial value generating device 21 and first comparing device 23 from thermosensor 17. When second electric signal S2 is sent to primary initial value generating device 21 and first comparing device 23, step 203 proceeds to step 204. In step 204, primary initial value generating device 21 processes the second electric signal S2 so as to generate third electric signal S3 having various amperages Ia shown in Figure 2. When third electric signal S3 is generated in primary initial value generating device 21, step 204 proceeds to step 205.

In step 205, the operation of compressor 11 is initiated by receiving the power from the engine of the automobile through electromagnetic clutch 111 while the third electric signal S3 is sent from primary initial value generating device 21 to amplifier 30 through first terminal 27a of second switching device 27 so that the electric current having the amplified amperage $G_I(Ia)$ is supplied to the solenoid of the externally controlled capacity control mechanism of the compressor so as to adjust the control point of pressure in the compressor suction chamber to be maintained at one certain value. Furthermore, if the detected temperature Tea is equal to or higher than the predetermined second boundary value T2, amperage Ia of third electric signal S3 is maintained at the second constant value Ic2 so that the control point of pressure in the compressor suction chamber is adjusted to be maintained at 1.0 $kg/cm^2$ G. On the other hand, if the detected temperature Tea is lower than the predetermined second boundary value T2, amperage Ia of third electric signal S3 is maintained at one certain value which is greater than the third constant value Ic3 so that the control point of pressure in the compressor suction chamber is adjusted to be maintained at one certain value which is greater than 1.7 $kg/cm^2$ G.

After the duration of operation of the compressor 11 in step 205, step 205 proceeds to step 206. In step 206, the second comparing device 25 compares whether the detected temperature Te is higher than the third boundary value T3. If the detected temperature Te is higher than the third boundary value T3, step 206 returns to step 205. On the other hand, if the detected temperature Te is equal to or lower than the third boundary value T3, step 206 proceeds to step 207. In step 207, second switching device 27 operates to connect second operation device 26c to amplifier 30 through second terminal 27a thereof, and concurrently, the comparing result of first comparing device 23 is recalled.

When second operation device 26c is connected to amplifier 30, and concurrently, the comparing result of first comparing device 23 is recalled, step 207 proceeds to step 208. In step 208, if the recalled comparing result of first comparing device 23 shows that the detected temperature Tea is lower than the predetermined second boundary value T2, step 208 proceeds to step 209. In step 209, eleventh electric signal S11 which is identical to third electric signal S3 is sent to second operation device 26c from secondary initial value generating device 29. When the eleventh electric signal S11 is sent to second operation device 26c, step 209 proceeds to step 212.

On the other hand, if the recalled comparing result of first comparing device 23 shows that the detected temperature Tea is equal to or higher than the predetermined second boundary value T2, step 208 proceeds to step 210. In step 210, the operation of equation (1) is carried out in first operation device 28 so as to generate tenth electric signal S10. When the tenth electric signal S10 is generated in first operation device 28, step 210 proceeds to step 211. In step 211, the tenth electric signal S10 is processed in secondary initial value generating device 29 so as to generate twelfth electric signal S12. Then, the twelfth electric signal S12 is sent to second operation device 26c from secondary initial value generating device 29. When the twelfth electric signal S12 is sent to second operation device 26c from secondary initial value generating device 29, step 211 proceeds to step 212.

In step 212, the operation of equation (3) is carried out in second operation device 26c so as to generate fifteenth electric signal S15 having various amperage I(l), and fifteenth electric signal S15 is sent to amplifier 30 through second terminal 27b of second switching device 27 to be amplified its amperage. Then, the electric current having amplified amperage $G_I(I(\ell))$ is supplied to the solenoid of the externally controlled variable capacity control mechanism of the compressor 11 so as to adjust the control point of pressure in the compressor suction chamber at various values so that the temperature Te is converged at the set temperature Tset. Step 212 continuously goes on until the operation of the automotive air conditioning system is terminated.

Figures 5 illustrates a cool-down characteristic in the initial operation stage of the automotive air conditioning system in a situation where the detected temperature Te is equal to or higher the predetermined second boundary value T2. More specifically, in Figure 5, the cool-down characteristic of the automotive air conditioning system in accordance with one embodiment of the present is indicated by a solid line.

With reference to Figure 5, from a time t0 when the operation of refrigerant circuit 10 is initiated to a time t1 when the temperature Te drops to the third boundary value T3, the control point of pressure in the compressor suction chamber is adjusted by the third electric signal S3 of which amperage Ia is second constant value Ic2 so as to maintain at 1.0 $kg/cm^2$G. Therefore, the temperature Te quickly drops to the third boundary value T3 by the time t1.

Once the temperature Te drops to the third boundary value T3 at the time t1, the control point of pressure in the compressor suction chamber is adjusted by the proportional control action which is initialized by twelfth electric signal S12 of which amperage Ib is a relatively larger value. Accordingly, in the initial operation stage of the automotive air conditioning system, the temperature Te of the air immediately downstream evaporator 14 quickly drops without overshooting from the set temperature Tset while is quickly and effectively converged at the set temperature Tset.

Therefore, the passenger compartment of the automobile can be more adequately air conditioned in the initial operation stage of the automotive air conditioning system.

Figure 6 illustrates a cool-down characteristic of the automotive air conditioning system in accordance with one embodiment of the present invention in a situation where temperature Tea is lower than the predetermined second boundary value T2. More specifically, in Figure 6, the cool-down characteristic of the automotive air conditioning system in accordance with one embodiment of the present is indicated by a solid line.

With reference to Figure 6, from the time t0 when the operation of refrigerant circuit 10 is initiated to the time t1 when the temperature Te drops to the third boundary value T3, the control point of pressure in the compressor suction chamber is adjusted by the third electric signal S3 of which amperage Ia is relatively larger value so as to maintain at a relatively larger value. Therefore, the temperature Te gently drops to the third boundary value T3 by the time t1.

Once the temperature Te drops to the third boundary value T3 at the time t1, the control point of pressure in the compressor suction chamber is adjusted by the proportional control action which is initialized by eleventh electric signal S11 which is identical to the third electric signal S3. Accordingly, in the initial operation stage of the automotive air conditioning system, the temperature Te of the air immediately downstream evaporator 14 gently drops without overshooting from the set temperature Tset while is quickly and effectively converged at the set temperature Tset.

Therefore, the passenger compartment of the automobile can be more adequately air conditioned in the initial operation stage of the automotive air conditioning system.

## Claims

1. An automotive air conditioning system including, a refrigerant circuit (10) having a refrigerant compressor (11) with an externally controlled variable capacity control mechanism and an evaporator (14) connected to a suction chamber of the refrigerant compressor; moving means (141) for moving air through an exterior surface of the evaporator (14); and a control mechanism (20) for controlling an operation thereof; the control mechanism (20) including, sensing means (17) for sensing temperature (Te,Tea) of air immediately downstream of the evaporator, comparing means (25) for determining whether the temperature (Te) of air immediately downstream the evaporator (14) during the operation of the refrigerant circuit (10) is higher that one certain value (T3) which is higher that a set value (Tset), and carrying out means for carrying out operation of a feedback control action; characterised by the control mechanism further comprising a first determining means (21) for determining a first value of a control point of pressure in the suction chamber of the compressor according to the temperature (Tea) of air immediately downstream of the evaporator at a time immediately before the operation of the refrigerant circuit is initiated, a second determining means (26c) for determining a second value of the control point of pressure in the suction chamber of the compressor (11) according to a thermal gradient with respect to a time in a situation where the temperature (Te) of air immediately downstream the evaporator (14) immediately before reaches the one certain value (T3) from a higher value side thereof, changing means (27) for changing a first situation in which the control point of pressure in the suction chamber of the compressor (11) is adjusted to be maintained at the first value to a second situation in which the control point of pressure in the suction chamber of the compressor is adjusted to be varied by a result of operation of the feedback control action when the temperature (Te) of air immediately downstream of the evaporator (14) during the operation of the refrigerant circuit (10) is equal to or lower than the one certain value (T3).

2. A system according to claim 1, wherein the feedback control action is a proportional control action which includes a value obtained by subtracting the temperature (Te) of air immediately downstream the evaporator during the operation of the refrigerant circuit (10) from the set temperature (Tset).

3. A system according to claim 2, further including another comparing means (23) for determining whether the temperature (Tea) of air immediately downstream the evaporator at the time immediately before the operation of the refrigerant circuit (10) is initiated is equal to or higher than one predetermined boundary value (T2).

4. A system according to claim 3, wherein the proportional control action is initialised by the first value when the temperature (Tea) of air immediately downstream the evaporator (14) at the time immediately before the operation of the refrigerant circuit is initiated is lower than the one predetermined boundary value (T2).

5. A system according to claim 3, wherein the proportional control action is initialised by the second value when the temperature (Tea) of air immediately downstream of the evaporator at the time immediately before the operation of the refrigerant circuit is initiated is equal to or higher than the one predetermined boundary value (T2).

## Patentansprüche

1. Kraftfahrzeugklimaanlage mit einem Kühlkreislauf (10) mit einem Kühlkompressor (11) mit einem extern gesteuerten variablen Kapazitätssteuermechanismus und einem Verdampfer (14), der mit einer Ansaugkammer des Kühlkompressors verbunden ist;
einer Bewegungsvorrichtung (141) zum Bewegen von Luft durch eine äußere Oberfläche des Verdampfers (14); und
einem Steuermechanismus (20) zum Steuern dessen Betriebes; wobei der Steuermechanismus (20) aufweist

eine Sensoreinrichtung (17) zum Erfassen der Temperatur (Te, Tea) der Luft unmittelbar stromabwärts von dem Verdampfer,
eine Vergleichseinrichtung (25) zum Bestimmen, ob die Temperatur (Te) der Luft unmittelbar stromabwärts von dem Verdampfer (14) während des Betriebes des Kühlkreislaufes (10) höher als der eine bestimmte Werte (T3) ist, der höher als ein eingestellter Wert (Tset) ist, und
eine Ausführungseinrichtung zum Ausführen eines Betriebes einer Rückkopplungssteuertätigkeit;
dadurch gekennzeichnet, daß
der Steuermechanismus weiter aufweist
eine erste Bestimmungseinrichtung (21) zum Bestimmen eines ersten Wertes eines Steuerpunktes des Druckes in der Ansaugkammer des Kompressors gemäß der Temperatur (Tea) der Luft unmittelbar stromabwärts von dem Verdampfer zu einer Zeit, unmittelbar bevor der Betrieb des Kühlkreislaufes begonnen wird,
eine zweite Bestimmungseinrichtung (26c) zum Bestimmen eines zweiten Wertes des Steuerpunktes des Druckes in der Ansaugkammer des Kompressors (11) gemäß einem thermischen Gradienten in Bezug auf eine Zeit in einer Situation, in der die Temperatur (Te) der Luft unmittelbar stromabwärts von dem Verdampfer (14) unmittelbar zuvor den einen bestimmten Wert (T3) von einer Seite des höheren Wertes davon erreicht hat,
eine Änderungseinrichtung (27) zum Ändern einer ersten Situation, in der der Steuerpunkt des Druckes in der Ansaugkammer des Kompressors (11) so eingestellt ist, daß er an dem ersten Wert bis zu einer zweiten Situation gehalten wird, in der der Steuerpunkt des Druckes in der Ansaugkammer des Kompressors so eingestellt wird, daß er durch ein Resultat des Betriebes der Rückkopplungssteuertätigkeit variiert wird, wenn die Temperatur (Te) der Luft unmittelbar stromabwärts von dem Verdampfer (14) während des Betriebes des Kühlkreislaufes (10) gleich oder niedriger als der eine bestimmte Wert (T3) ist.

2. Anlage nach Anspruch 1, bei der die Rückkopplungssteuertätigkeit eine Proportionalsteuertätigkeit ist, die einen Wert enthält, der durch Subtrahieren der Temperatur (Te) der Luft unmittelbar stromabwärts von dem Verdampfer während des Betriebes des Kühlkreislaufes (10) von der eingestellten Temperatur (Tset) erhalten wird.

3. Anlage nach Anspruch 2, weiter mit einer anderen Vergleichseinrichtung (23) zum Bestimmen, ob die Temperatur (Tea) der Luft unmittelbar stromabwärts von dem Verdampfer zu der Zeit, unmittelbar bevor der Betrieb des Kühlkreislaufes (10) begonnen wird, gleich oder höher als ein vorbestimmter Grenzwert (T2) ist.

4. Anlage nach Anspruch 3, bei der die Proportionalsteuertätigkeit durch den ersten Wert begonnen wird, wenn die Temperatur (Tea) der Luft unmittelbar stromabwärts von dem Verdampfer (14) zu der Zeit, unmittelbar bevor der Betrieb des Kühlkreislaufes begonnen wird, niedriger als der eine vorbestimmte Grenzwert (T2) ist.

5. Anlage nach Anspruch 3, bei der die Proportionalsteuertätigkeit durch den zweiten Wert begonnen wird, wenn die Temperatur (Ta) der Luft unmittelbar stromabwärts von dem Verdampfer zu der Zeit, unmittelbar bevor die Tätigkeit des Kühlkreislaufes begonnen wird, gleich oder höher als der eine vorbestimmte Grenzwert (T2) ist.

## Revendications

1. Système de conditionnement d'air de voiture automobile comprenant, un circuit de réfrigérant (10) comportant un compresseur de réfrigérant (11) muni d'un mécanisme de commande de capacité variable commandé extérieurement, et un évaporateur (14) relié à une chambre d'aspiration du compresseur de réfrigérant ; des moyens de déplacement (141) pour faire passer l'air à travers une surface extérieure de l'évaporateur (14) ; et un mécanisme de commande (20) pour commander son fonctionnement ; le mécanisme de commande (20) comprenant des moyens de détection (17) pour détecter la température (Te, Tea) de l'air juste en aval de l'évaporateur, des moyens de comparaison (25) pour déterminer si la température (Te) de l'air juste en aval de l'évaporateur (14) pendant le fonctionnement du circuit de réfrigérant (10), est plus élevée qu'une certaine valeur (T3) supérieure à une valeur de réglage (Tset), et des moyens de fonctionnement pour effectuer une opération d'une action de commande de rétroaction ; caractérisé en ce que le mécanisme de commande comprend en outre un premier moyen de détermination (21) pour déterminer une première valeur d'un point de commande de pression dans la chambre d'aspiration du compresseur, suivant la température (Tea) de l'air juste en aval de l'évaporateur, à un instant situé juste avant que le fonctionnement du circuit de réfrigérant soit déclenché, un second moyen de détermination (26c) pour déterminer une seconde valeur du point de commande de pression dans la chambre d'aspiration du compresseur (11), suivant un gradient thermique par rapport au temps, dans une situation où la température (Te) de l'air juste en aval de l'évaporateur (14) vient juste d'atteindre la valeur (T3) ci-dessus à partir d'une valeur latérale plus élevée de celui-ci, des moyens de changement (27) pour passer d'une première situation dans laquelle le point de commande de pression dans la chambre d'aspiration du compresseur (11) est réglé pour être maintenu à la première valeur, à une seconde situation dans laquelle le point de commande de pression dans la chambre d'aspiration du compresseur est réglé pour varier du fait de l'opération de l'action de commande de rétroaction lorsque la température (Te) de l'air juste en aval de l'évaporateur (14) pendant le fonctionnement du circuit de réfrigérant (10), est égale ou inférieure à la valeur (T3) ci-dessus.

**2.** Système selon la revendication 1, caractérisé en ce que l'action de commande de rétroaction est une action de commande proportionnelle qui comprend une valeur obtenue en soustrayant la température (Te) de l'air juste en aval de l'évaporateur pendant le fonctionnement du circuit de réfrigérant (10), de la température de réglage (Tset).

**3.** Système selon la revendication 2, caractérisé en ce qu'il comprend en outre un autre moyen de comparaison (23) pour déterminer si la température (Tea) de l'air juste en aval de l'évaporateur à l'instant venant juste avant que le fonctionnement du circuit de réfrigérant (10) soit déclenché, est égale ou supérieure à la valeur limite prédéterminée ci-dessus (T2).

**4.** Système selon la revendication 3, caractérisé en ce que l'action de commande proportionnelle est déclenchée par la première valeur lorsque la température (Tea) de l'air juste en aval de l'évaporateur (14) à l'instant venant juste avant que le fonctionnement du circuit de réfrigérant soit déclenché, est inférieure à la valeur limite prédéterminée ci-dessus (T2).

**5.** Système selon la revendication 3, caractérisé en ce que l'action de commande proportionnelle est déclenchée par la seconde valeur lorsque la température (Tea) de l'air juste en aval de l'évaporateur à l'instant venant juste avant que le fonctionnement du circuit de réfrigérant soit déclenché, est égale ou supérieure à la valeur limite prédéterminée ci-dessus (T2).

Fig. 1

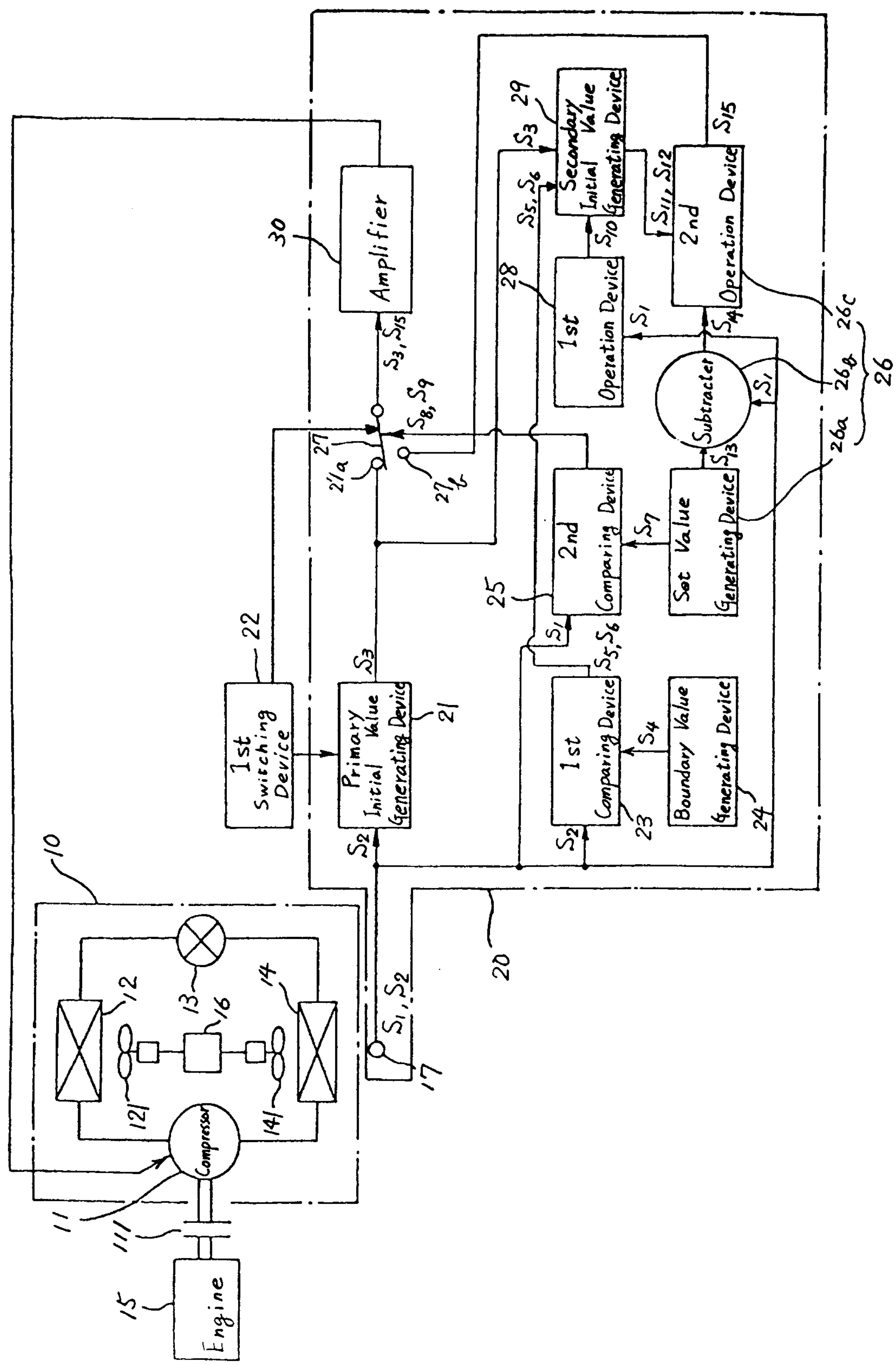
Engine
Compressor
Amplifier
1st Switching Device
Primary Initial Value Generating Device
1st Comparing Device
Boundary Value Generating Device
2nd Comparing Device
Set Value Generating Device
Subtracter
1st Operation Device
2nd Operation Device
Secondary Initial Value Generating Device
10
11
111
12
121
13
14
141
15
16
17
20
21
22
23
24
25
26
26a
26b
26c
27
27a
27b
28
29
30
S1, S2
S2
S3
S4
S5, S6
S1
S7
S8, S9
S3, S15
S13
S14
S10
S11, S12
S15

Fig. 2

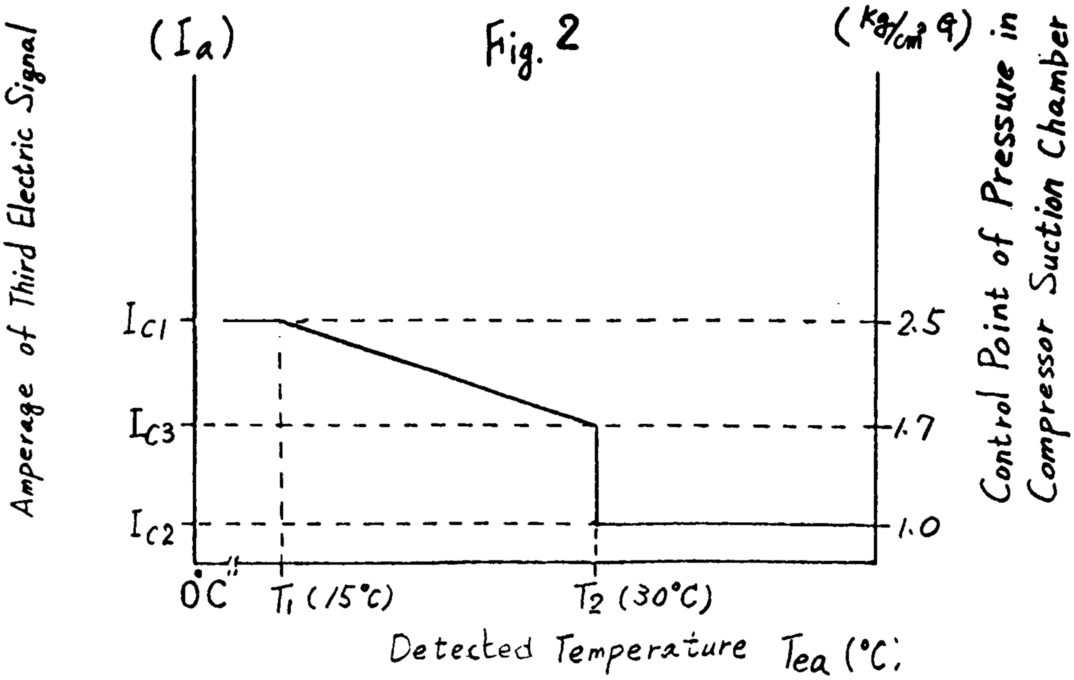
(Ia)
Amperage of Third Electric Signal
(kg/cm² G)
Control Point of Pressure in Compressor Suction Chamber
Ic1
Ic3
Ic2
2.5
1.7
1.0
0C
T1 (15°C)
T2 (30°C)
Detected Temperature Tea (°C)

Fig. 3

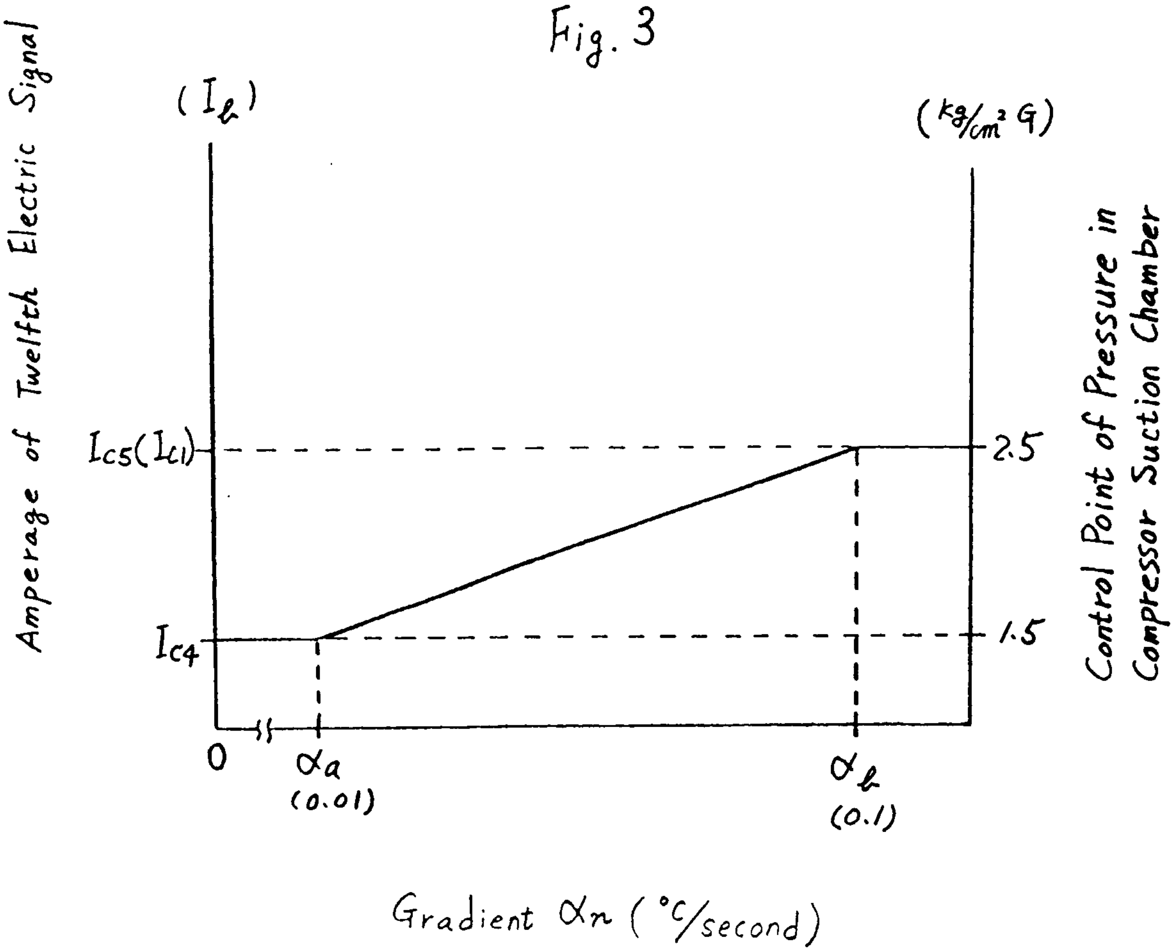
(Iℓ)
Amperage of Twelfth Electric Signal
(kg/cm² G)
Control Point of Pressure in Compressor Suction Chamber
Ic5(Ic1)
Ic4
2.5
1.5
0
αa
(0.01)
αℓ
(0.1)
Gradient αn (°C/second)

Fig. 4

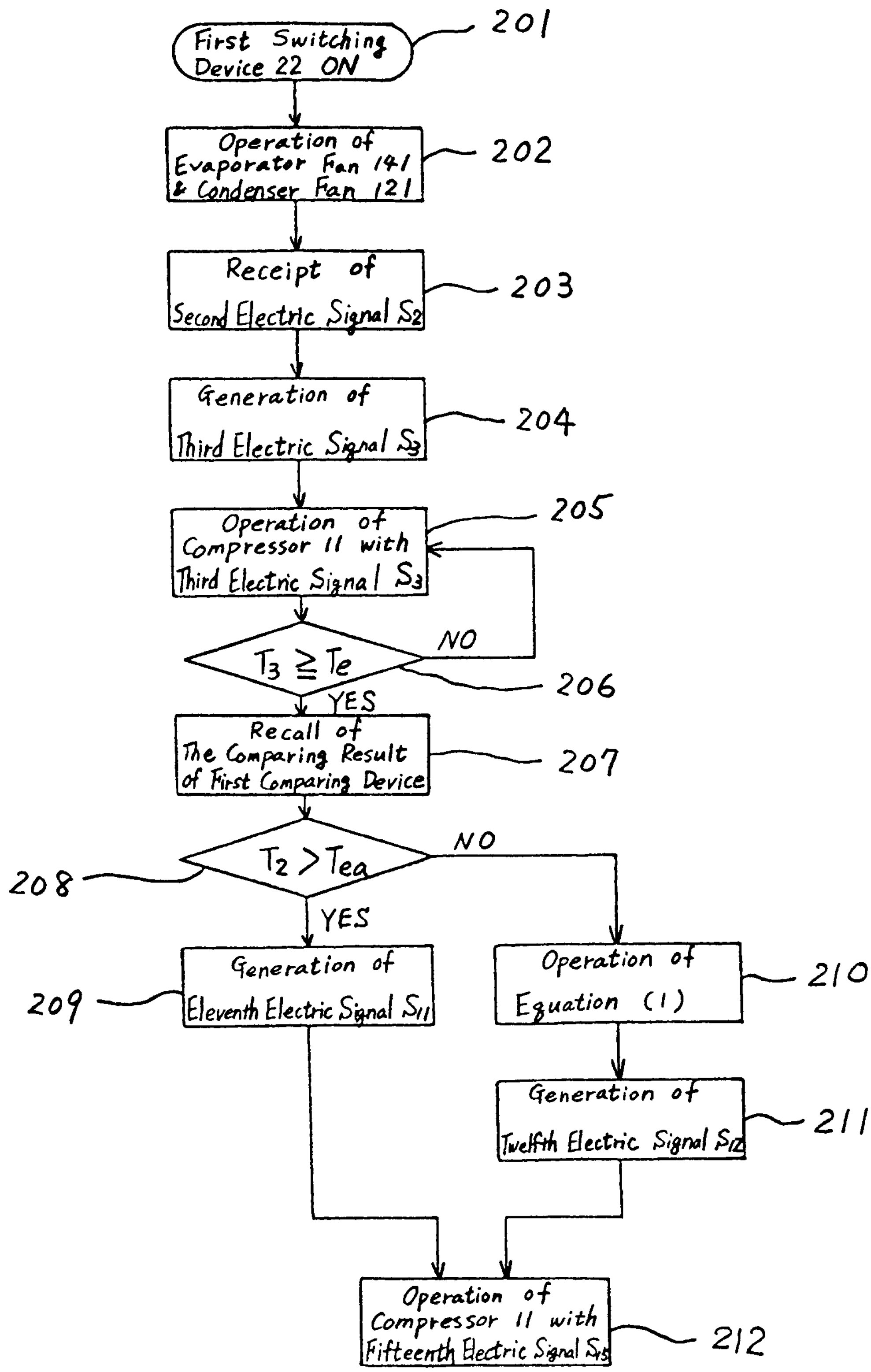

201
First Switching Device 22 ON
202
Operation of Evaporator Fan 141 & Condenser Fan 121
203
Receipt of Second Electric Signal S2
204
Generation of Third Electric Signal S3
205
Operation of Compressor 11 with Third Electric Signal S3
NO
T3 ≧ Te
206
YES
Recall of The Comparing Result of First Comparing Device
207
NO
T2 > Tea
208
YES
Generation of Eleventh Electric Signal S11
209
Operation of Equation (1)
210
Generation of Twelfth Electric Signal S12
211
Operation of Compressor 11 with Fifteenth Electric Signal S15
212

Fig. 5

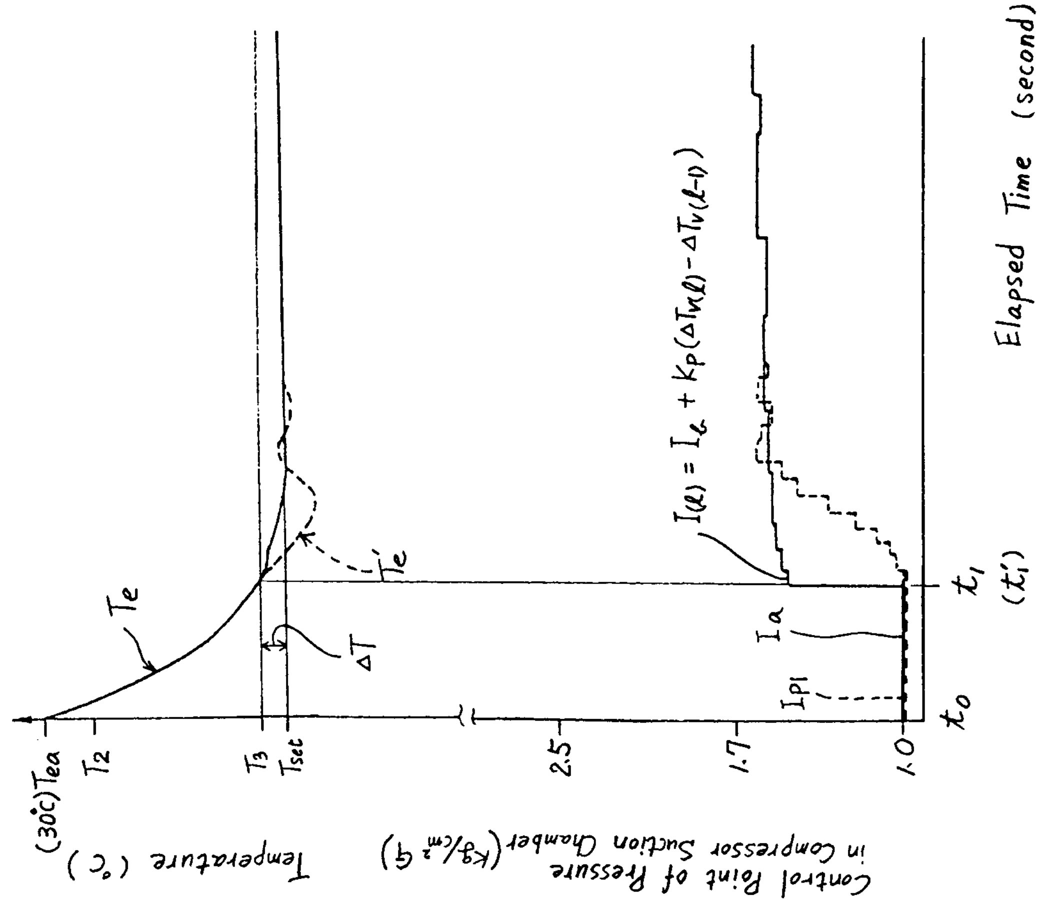
(30°C)Tea
T2
T3
Tset
2.5
1.7
1.0
Temperature (°C)
Control Point of Pressure in Compressor Suction Chamber (Kg/cm² G)
Te
ΔT
Ia
Ip1
I(ℓ) = Iℓ + Kp(ΔTv(ℓ) - ΔTv(ℓ-1))
t0
t1
(t1')
Elapsed Time (second)

Fig. 6

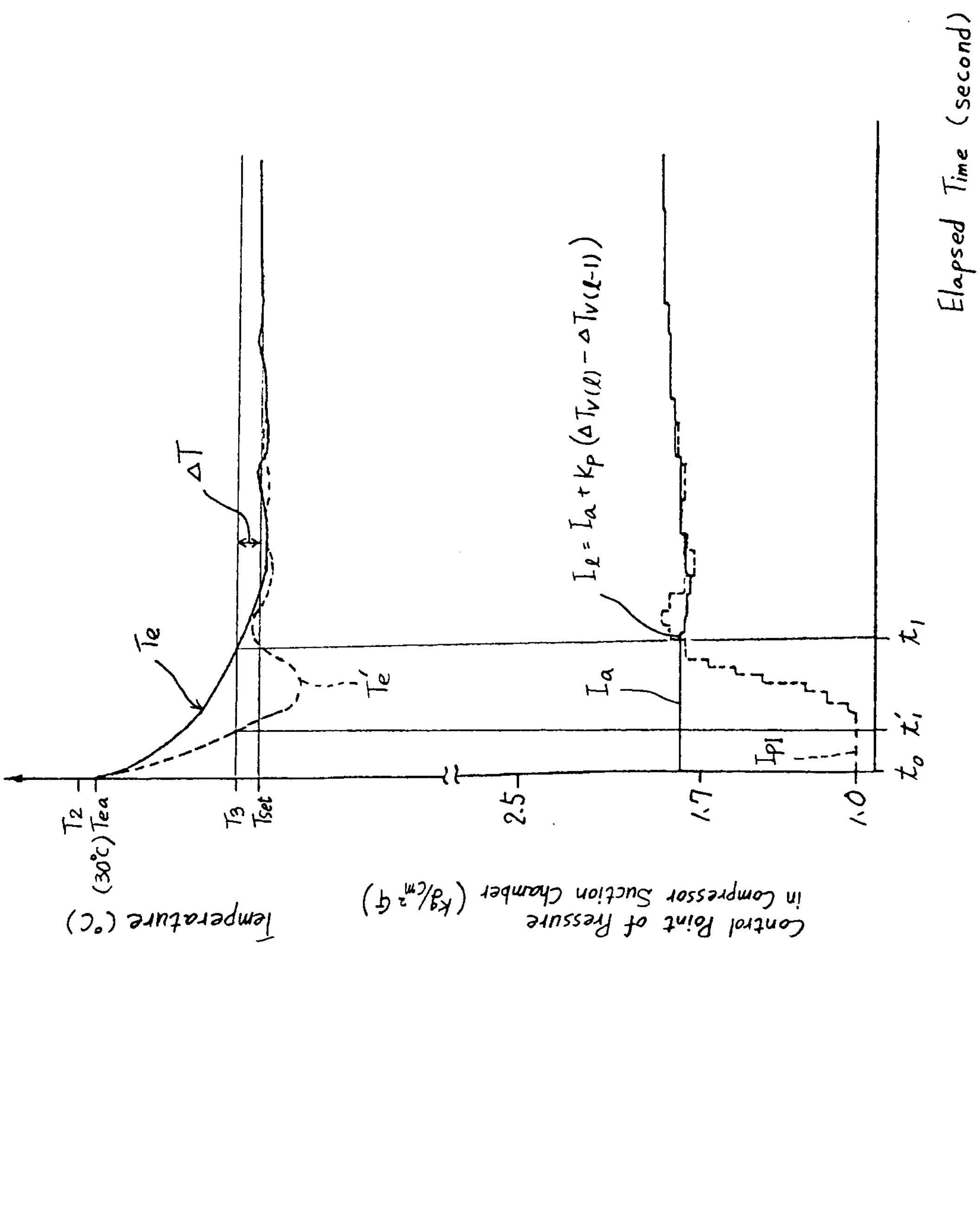
Temperature (°C)
$T_2$ (30°C) $T_{ea}$
$T_3$
$T_{set}$
2.5
1.7
1.0
Control Point of Pressure in Compressor Suction Chamber (Kg/cm² G)
$T_e$
$T_e'$
$\Delta T$
$I_a$
$I_{p1}$
$I_\ell = I_a + K_p (\Delta T_{v(\ell)} - \Delta T_{v(\ell-1)})$
$t_0$
$t_1'$
$t_1$
Elapsed Time (second)